# DEMANDE DE BREVET EUROPEEN

(11) **EP 3 934 060 A1**
(43) Date de publication de la demande: **05.01.2022**
(21) Numéro de dépôt: 21179146.2
(22) Date de dépôt: 07.10.2014
(51) Int. Cl.: H02K 1/14, H02K 1/27, H02K 3/34, H02K 3/52

(54) **MACHINE ÉLECTRIQUE À BOBINAGE CONCENTRÉ**

(30) Priorité: 07.10.2013 FR 1359683
(62) Demande divisionnaire de: 14790232.4
(71) Demandeur: Moving Magnet Technologies, 25000 Besançon (FR)
(72) Inventeur: BIWERSI, Stéphane, 25000 Besançon (FR); BILLET, Lionel, 25000 Besançon (FR)
(74) Mandataire: IP Trust

(57) **Abrégé**

La présente invention concerne une machine électrique comprenant un rotor tubulaire aimanté pour présenter des alternances polaires circonférentielles, et un stator comportant un corps (4) étant traversé par un canal (16) d'une section transversale intérieure correspondant sensiblement à la section transversale extérieure dudit rotor, ledit corps (4) supportant une pluralité de bobines (5a à 5c), ledit stator étant entouré par une enveloppe (2) extérieure ferromagnétique, caractérisée en ce que ledit corps (4) est prolongé par trois, quatre ou six protubérances radiales en un matériau isolant électriquement, présentant, en section transversale, un noyau (20 à 22) longitudinal pour recevoir une bobine , ledit noyau (16) étant prolongé par une extension périphérique (30 à 32) présentant une surface extérieure complémentaire à la surface intérieure de ladite enveloppe (2) et recouvrant la zone bobinée.

L'invention concernant aussi un procédé de fabrication d'une telle machine électrique.

## Description

### DOMAINE TECHNIQUE DE L'INVENTION

La présente invention se rapporte au domaine des machines à aimant permanent, et plus particulièrement des moteurs et micro-moteurs destinés à produire des puissances mécaniques importantes à vitesse élevée et dans des petits diamètres.

### ETAT DE LA TECHNIQUE ANTERIEURE

Dans le domaine des machines à aimant de petites dimensions (typiquement, mais de manière non limitative) de diamètre inférieur à 30 mm, il est commun d'utiliser des topologies de stator sans encoches (ou slotless) par opposition à des topologies à encoches, correspondant à un stator constitué d'une pluralité de dents, bobinées ou pas.

Les solutions sans encoches sont tout particulièrement adaptées aux petits diamètres, notamment lorsque l'on veut obtenir un couple sans courant très faible, voire nul, ce qui s'avère très difficile avec les structures à encoches que ce soit du fait du circuit statorique (tolérances géométriques), qu'au niveau du rotor (tolérances géométriques ou homogénéité des aimants permanents). Plus particulièrement, une machine sans encoche ayant un entrefer magnétique homogène présente un couple sans courant nul.

De ce fait, une telle machine est tout particulièrement favorable à un emploi à très haute vitesse (typiquement de quelques dizaines de milliers à quelques centaines de milliers de tours par minutes) car l'absence de couple sans courant permet de minimiser les ondulations de couple, les vibrations et le bruit, les pertes...

A contrario, l'absence de dents statoriques réduit la densité de puissance de telles machines, et en réduit la pertinence pour un emploi dans des structures de grand diamètre et/ou destinées à produire des puissances mécaniques élevées à basse vitesse.

Le bobinage est une problématique particulièrement critique dans les moteurs sans encoches, notamment dans les cas de miniaturisation extrême, typiquement pour des diamètres inférieurs à 10 millimètres.

A titre d'exemple, le fonctionnement de tels moteurs est décrit dans l'article G.J. Yan, J.H. Wang & S.J. Yan, J. Sci. Innov., 2012, Vol. 2, No. 1, 39-48.

Les bobinages circonférentiels autoportant (ou en « cloche ») traditionnellement utilisés dans ces moteurs sans encoches sont décrits par exemple dans les brevets GB903285 et GB1046993. Ces solutions conduisent à des coûts d'industrialisation élevés, notamment lorsque l'on souhaite réaliser un moteur de très faible diamètre. Un tel bobinage n'est également pas adapté aux configurations mettant en œuvre un faible nombre de tours de fil de diamètre élevé, comme c'est fréquemment le cas lorsque l'on cherche à atteindre des vitesses élevées.

**On** connait des solutions proposant un bobinage concentré (enroulement dont les spires sont jointives), mais basées sur des bobines séparées, dites autoporteuses (appelées aussi « air core », c'est-à-dire bobinées individuellement et sans support notamment ferromagnétique) qu'il faut positionner dans le stator, et ensuite fixer, souvent via l'emploi de surmoulage, et enfin isoler du stator. Ceci passe par des mises en œuvre coûteuses et complexes.

Pour y remédier, la demande de brevet JP2008154340 propose l'emploi de coques amagnétiques sous forme d'une section de cylindre portant chacune une bobine autoporteuse positionnée par une ou plusieurs protrusions s'étendant radialement vers l'intérieur, les bobines étant ensuite maintenues en place par de la résine, et les coques étant enfin rassemblées entre elles. Ce processus de réalisation est complexe et le fait de rassembler plusieurs pièces dans un micro-moteur nécessite des tolérances de réalisation et de positionnement des pièces très strictes.

Une autre solution décrite dans la demande de brevet JP2004254443 décrit l'emploi d'un support articulé, placé à plat et sur lequel sont enroulées les bobines par un processus automatisé, le dit support étant ensuite enroulé et inséré dans le boitier du moteur. Une telle solution n'est pas adaptée à des moteurs de très petites dimensions car les épaisseurs de matière extrêmement faibles au niveau de l'articulation entre chaque zone supportant les bobines rendent l'ensemble extrêmement fragile.

Pour remédier à certains défauts décrits ci-dessus, l'emploi d'une pièce unique sur laquelle les bobines sont enroulées est une solution intéressante. La demande de brevet JP2010242407 en illustre une variante où 3 bobines sont enroulées par l'extérieur sur un cylindre prolongé de 3 trois protrusions s'étendant radialement vers l'extérieur et servant de supports pour le bobinage. Cependant, une telle solution nécessite l'ajout d'un isolant entre le bobinage et la pièce de fermeture de flux enserrant le bobinage. De plus, dans les très petits diamètres (typiquement en dessous de 10 mm), l'épaisseur de ces protrusions devient un réel problème.

On connaît dans l'état de la technique la demande de brevet américaine US20120274167 décrivant un moteur à courant continu sans balais ayant un stator sans rainures et plus spécifiquement un moteur à courant continu sans balais ayant un stator sans rainures conçu pour éviter la présence de forces gênant une rotation dans le rotor par formation d'un rotor navette à partir d'un matériau isolant tout en permettant simultanément une alimentation à haut débit du moteur à courant continu; le mode de réalisation selon ce document de l'art antérieur concerne l'enroulement d'une grande quantité de bobines dans le sens de la longueur d'un arbre rotatif par formation d'une pluralité de saillies de bobinage qui permettent d'enrouler les bobines sur un rotor navette, de sorte que les protubérances de bobinage soient en saillie avec des espaces à intervalles prédéfinis le long de la circonférence de la surface périphérique extérieure du corps de rotor navette.

**A** nouveau, la mise en œuvre d'une telle solution dans les petits diamètres est problématique.

### Inconvénients de l'art antérieur

Les solutions de l'art antérieur ne permettent pas d'atteindre des performances (vitesse, puissance) optimales. Par ailleurs, la configuration des stators rend difficile le bobinage avec des fils de diamètre adapté à des puissances élevées. En particulier, pour des moteurs destinés à des vitesses élevées, de plusieurs centaines de milliers de tours par minutes, il est nécessaire de réduire le nombre de spires par bobine et par phase de moteur, et donc d'augmenter la section des fils de bobinage. De manière générale, les solutions proposées dans l'art antérieur ne sont pas adaptées au cas des micromachines, typiquement de diamètre inférieur à 10mm

Ainsi, la solution proposée par la demande de brevet américain US20120274167 prévoit un grand nombre de bobines, conduisant à un diamètre extérieur important. Par ailleurs, cette solution implique l'utilisation de pièces additionnelles d'isolation et un rainurage de l'enveloppe extérieure.

### Solution apportée par l'invention

La solution ici présentée se propose donc de remédier à tout ou partie des problèmes énoncés ci-dessus, et plus particulièrement de mettre en œuvre une solution de bobinage plus aisée et tout particulièrement adaptée à un fort niveau d'automatisation pour des machines de petits diamètres, en s'appuyant sur un bobinage concentré effectué sur un corps de bobine unique présentant une forme adaptée à l'utilisation en faible diamètre.

### Exposé de l'invention

**A** cet effet, l'invention concerne selon son acception une machine comprenant un rotor tubulaire aimanté pour présenter des alternances polaires circonférentielles, et un stator comportant un corps étant traversé par un canal d'une section transversale intérieure correspondant sensiblement à la section transversale extérieure dudit rotor, ledit corps supportant une pluralité de bobines, ledit stator étant entouré par une enveloppe extérieure ferromagnétique, caractérisé en ce que ledit corps est prolongé par trois, quatre ou six protubérances radiales en un matériau isolant électriquement, présentant, en section transversale, un noyau longitudinal pour recevoir une bobine, ledit noyau étant prolongé par une extension périphérique présentant une surface extérieure complémentaire à la surface intérieure de ladite enveloppe et recouvrant la zone bobinée.

L'intérêt de cette solution est de pouvoir bobiner sur un support (le corps) présentant des logements destinés à recevoir le bobinage, permettant ainsi un positionnement précis des bobinages et un assemblage aisé tout en offrant une structure robuste et en ne requérant pas d'insérer un isolant entre les bobinages et l'enveloppe servant de pièce de fermeture de flux.

De préférence, la machine selon l'invention présente un corps comportant trois protubérances et un rotor à une ou deux paires de pôles, le corps présentant une partie centrale de section transversale triangulaire.

Avantageusement, le rayon du rotor est supérieur à la distance entre l'axe longitudinal dudit canal du stator et le plan passant par la spire intérieure du bobinage.

De préférence, le rayon extérieur de l'enveloppe est inférieur à 5 millimètres.

Selon un premier mode de réalisation, ledit rotor aimanté est constitué par un assemblage d'aimants en forme de tuiles aimantées diamétralement, selon des directions alternées.

Selon un second mode de réalisation, ledit rotor aimanté est constitué par un matériau monolithique fritté aimanté selon une direction unique ou des directions alternées.

Avantageusement, ledit corps présente à l'une des extrémités des surfaces métallisées pour la soudure du fil de bobinage d'une part, et la liaison avec élément de connexion d'autre part.

Selon une mode de réalisation avantageux, ledit stator est réalisé en un matériau déformable élastiquement.

Selon une variante, lesdites protubérances sont fendues selon un plan de symétrie radial.

Ce bobinage sera typiquement réalisé via une bobineuse automatique, avant que le support de bobine ne soit inséré dans la pièce de fermeture de flux. Par extension, l'invention concernera donc également une méthode d'assemblage consistant à réaliser en premier lieu le corps, à effectuer les bobinages, puis à insérer ce sous-ensemble à l'intérieur de l'enveloppe et à effectuer les opérations de connectique nécessaires et enfin d'insérer la partie mobile.

Plus particulièrement, le corps comportera des rainures s'étendant axialement et transversalement et permettant de guider et maintenir le fil, tout en protégeant naturellement les bobines de manière à ce qu'elles n'entrent pas en contact avec la pièce de fermeture de flux. Ceci sera permis par le fait que le corps présente des protubérances radiales faites en un matériau isolant électrique celles-ci comportant un noyau permettant de recevoir les bobines.

Si un bobinage « droit », c'est-à-dire conduisant à une bobine de section rectangulaire, est la mise en œuvre la plus conventionnelle, dans le cas d'une machine tournante de petit diamètre et/ou comportant un faible nombre de bobines (par exemple trois), ceci entraine le fait que les bobines « chevauchent » le rotor, impliquant notamment que le bobinage soit effectué une fois le rotor inséré dans le support et, par exemple, le corps soit réalisé en au moins deux pièces, typiquement deux coques identiques rassemblées axialement en un seul support avant le bobinage. Ce n'est cependant pas la solution la plus favorable.

C'est pourquoi, selon une variante préférentielle, les rainures seront réalisées de manière à ce que leur partie transversale décrive un profil circulaire, permettant de réaliser des bobines de forme cylindrique, et d'avoir un corps n'interférant pas avec le rotor.

Selon une autre variante, le corps peut être réalisé de manière à présenter une certaine élasticité, permettant ainsi de mieux accepter certaines tolérances lors de son insertion dans l'enveloppe.

La connectique étant une problématique particulièrement sensible, du fait de la taille et des petits diamètres de fil mis en œuvre, on peut imaginer que le corps intègre des éléments de connexion sur lesquels seront directement soudés les fils des bobines.

Un autre procédé d'élaboration du corps et du bobinage, permettant d'intégrer la connectique, serait d'utiliser une solution de type MID (Moulded Interconnected Device), combinant plusieurs matières en 3 dimensions (typiquement plastique et cuivre).

L'invention étant particulièrement destiné aux réalisations de petites dimensions, selon une réalisation particulière, le rayon extérieur du rotor est compris entre 0,4 R et 0,5 R, avec R désignant le rayon extérieur R du stator.

Selon une variante, la largeur moyenne L_{N} du noyau est comprise 0,5 R et 1,2 R.

Selon une réalisation particulière, la largeur maximale L_{P} de l'extension périphérique est comprise entre 1,1 R et 1,8 R et en tout état de cause supérieure à E+ L_{N}, où E désigne l'épaisseur de la bobine.

Dans une variante, la section des noyaux est constante.

Dans une seconde variante, la section des noyaux se restreint en direction de l'extérieur.

L'enveloppe du stator est composée soit d'un paquet de tôles empilées soit d'un matériau massif enroulé ou usiné.

En plus de la simplification de la structure statorique mentionnée ci-dessus, la présente invention se propose également de remédier à un des défauts des machines sans encoches par rapport aux machines à encoches, à savoir un plus faible facteur de couple à encombrement équivalent dû au fait que l'entrefer magnétique est plus élevé dans une structure sans encoches, diminuant ainsi fortement la constante de couple.

De manière générale, la solution proposée consiste à employer une matière chargée en particules ferromagnétiques disposée dans l'espace où sont disposés les bobinages, soit l'entrefer mécanique entre le rotor et l'enveloppe, moins le jeu mécanique nécessaire à la rotation sans contact du rotor.

Selon une variante avantageuse, ledit corps est partiellement ou intégralement réalisé en une telle matière.

Selon une autre variante, une telle matière est injectée pour compléter l'espace laissé vide par le corps et les bobinages, moins le jeu mécanique nécessaire à la rotation sans contact du rotor.

Selon une autre variante encore, l'enveloppe extérieure est réalisée en une matière plastique chargée avec des particules ferromagnétiques.

Selon une autre variante ladite enveloppe extérieure est également réalisée en une matière plastique chargée avec des particules ferromagnétiques.

Concernant l'augmentation de la constante de couple par rapport à une machine sans encoches classiques, il s'agit de remplir au maximum, et de la façon la plus homogène possible l'entrefer entre le rotor et l'enveloppe, moins l'espace nécessaire à la rotation sans contact du rotor, avec un mélange constitué d'un liant amagnétique et de poudre ferromagnétique. Dans tous les cas, l'emploi de tels mélanges est particulièrement favorable puisqu'un tel ensemble est isolé électriquement et conduit à de très faibles pertes magnétiques.

Plus particulièrement, la solution ici proposée s'inscrit selon une variante préférentielle, dans la continuité de l'idée d'utiliser un corps unique supportant les bobines. Selon des conceptions astucieuses telles que décrites ci-dessous, on obtiendra ainsi une structure avec une répartition quasi homogène de ce matériau dans l'entrefer, augmentant la densité de flux utile et donc la constante de couple, mais sans créer de couple sans courant.

Ainsi, selon une première variante, le corps sera directement réalisé avec un tel mélange (par exemple par injection d'un mélange liant plastique / particules ferromagnétiques ou par tout autre procédé adapté), le dit corps étant judicieusement réalisé de manière à remplir l'entrefer mécanique rotor / enveloppe de la façon la plus complète et homogène possible, en laissant uniquement le jeu nécessaire au déplacement sans contact de la partie mobile.

Selon une autre variante, on peut imaginer que le corps soit en certains endroits réalisé avec un tel mélange et en d'autres endroits avec une ou plusieurs matières, ayant par exemple des meilleures propriétés mécaniques (pour des questions de robustesse) ou des propriétés conductrices, pour faciliter la connectique.

Selon une autre alternative, le corps sera réalisé de manière évidée en matériau amagnétique de manière à ne comporter que la matière nécessaire à sa bonne tenue, mais en libérant un maximum de volume de manière à venir compléter l'entrefer avec un mélange de résine et de particules ferromagnétiques.

Concernant les propriétés magnétiques du mélange, il est à noter que les constatations faites par la demanderesse montrent que même avec des propriétés très modestes, le gain de performances est notoire. Ainsi, un essai fait avec un mélange présentant une perméabilité moyenne de l'ordre de 20 et un faible hystérésis (champ coercitif de l'ordre de 50 A/m) dans le cadre d'une structure de moteur rotatif triphasé de diamètre 25 mm avec 3 bobines et 2 paires de pôles rotorique a montré un gain de 20% sur la constante de couple. Ceci est particulièrement intéressant car avec des propriétés magnétiques aussi limitées, les pertes fer restent extrêmement faibles.

On peut donc obtenir des gains notables avec des perméabilités relatives inférieures à 100 si bien que, l'emploi de mélanges à relativement forte perméabilité tels que les matériaux de type Somaloy^{®} (qui ont typiquement des perméabilités relatives de plusieurs centaines, les matériaux magnétiques conventionnels dépassant le millier) n'est absolument pas nécessaire, ce qui présente un fort avantage économique ainsi qu'en termes de process devenant moins contraignant.

L'invention concerne aussi un procédé comprenant une étape de réalisation dudit corps, une étape de bobinage d'un fil conducteur autour de chacun desdits noyaux, une étape d'insertion dudit corps ainsi bobiné dans ladite enveloppe (2).

### BREVE DESCRIPTION DES FIGURES

L'invention sera mieux comprise au vu des figures suivantes concernant des exemples non limitatifs de réalisation où :
- la figure 1a présente un moteur selon l'invention selon une vue de perspective dans un premier mode de réalisation,
- la figure 1b présente le moteur de la figure 1 selon une vue de coupe transversale,
- la figure 1c présente le moteur de la figure 1 selon une vue de coupe axiale passant par l'axe de rotation,
- la figure 1d présente une vue isolée du support de bobine dans le premier mode de réalisation,
- la figure 2a présente un moteur selon l'invention selon une vue de perspective dans un deuxième mode de réalisation,
- la figure 2b présente une vue éclatée du moteur de la figure 2a,
- la figure 2c présente le moteur de la figure 2a selon une vue de coupe transversale,
- la figure 3 présente un mode de réalisation particulier d'un support de bobine selon l'invention,
- la figure 4 présente un mode de réalisation particulier de connectique de bobines sur un support bobiné selon l'invention,
- la figure 5a présente un autre mode de réalisation particulier d'un support bobiné selon l'invention
- la figure 5b présente le support bobiné de la figure 5a selon une vue de coupe transversale,
- la figure 6 présente une vue de coupe du support selon un mode de réalisation alternatif,

### DESCRIPTION DETAILLEE DU MODE DE REALISATION

### Premier exemple de réalisation

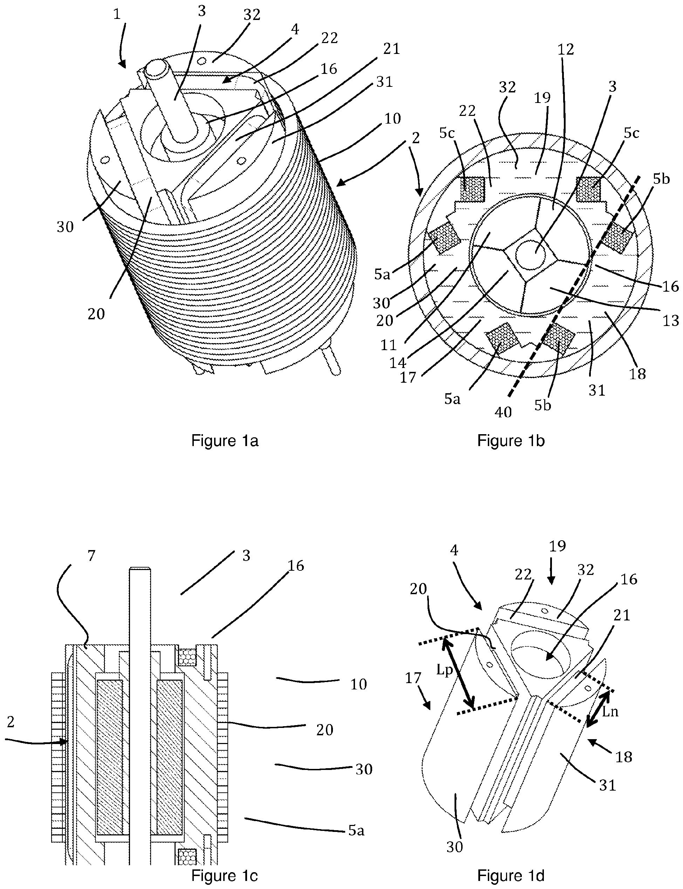

En figure 1a est montré un moteur électrique (1) triphasé sans encoche selon un premier mode de réalisation. De forme tubulaire, il comprend au stator une enveloppe extérieure (2) extérieure ici sous la forme, non limitative, d'un paquet de tôles (10) empilées dans le sens axial, c'est-à-dire selon l'axe de rotation (3). L'ensemble mobile est constitué d'un arbre de rotation (3) et d'un rotor aimanté (7) cylindrique, présentant ici deux paires de pôles aimantés (deux alternances de pôles magnétiques nord et sud). Dans l'exemple décrit, les pôles aimantés sont formés par des aimants (11 à 14) longitudinaux, aimantés transversalement pour présenter des alternances circonférentielles Nord - Sud. La surface extérieure des aimants présente la forme d'une portion de cylindre, afin que l'assemblage des aimants présente une surface extérieure tubulaire, à section circulaire constante sur toute la hauteur du moteur.

La partie centrale (15) est constituée par une pièce ferromagnétique formant une culasse magnétique et assurant la transmission du couple à l'axe (3) qui la traverse ou qui la prolonge.

L'ensemble statorique, outre l'enveloppe extérieure (2), comprend aussi un corps (4) représenté en détail en figure 1d. Ce corps (4) présente un canal longitudinal central (16), ainsi que trois protubérances (17 à 19) formant des noyaux (20 à 22) sur lesquels sont enroulées trois bobines électriques (5a, 5b et 5c) distinctes et séparées d'un angle de 120° chacune afin de former un ensemble d'excitation triphasé.

Comme on peut l'apprécier en figure 1b, le coprs (4) des bobines est réparti sur le pourtour intérieur de l'enveloppe extérieure (2) et forme des gorges ou encoches dans lesquelles sont enroulées les bobines (5a, 5b et 5c).

Les noyaux (20 à 22) sont prolongés radialement par des extensions périphériques (30 à 32) présentant une surface extérieure complémentaire à la surface intérieure de l'enveloppe extérieure (2). Ces extensions périphériques (30 à 32) recouvrent la zone bobinée entourant les noyaux (20 à 22) afin d'assurer l'isolement électrique des spires des bobinages (5a à 5c).

Dans ce premier mode de réalisation, les bobines (5a, 5b et 5c) sont installées de manière à ce qu'elles entourent partiellement la partie mobile aimantée (7) réalisant ainsi un ensemble compact.

Dans cet exemple, le canal (16) présente un rayon supérieur à la distance mesurée radialement entre l'axe longitudinal (3) central du moteur, et le plan (40) passant par la spire intérieure des bobines (5a, 5b, 5c). Cette solution permet de maximiser le volume utile de cuivre dans l'espace disponible.

Cette solution implique la mise en place du rotor (7) dans le canal (16) du stator, préalablement au bobinage.

Pour un stator de rayon extérieur R, le rayon extérieur du rotor est compris entre 0,4 R et 0,5 R.

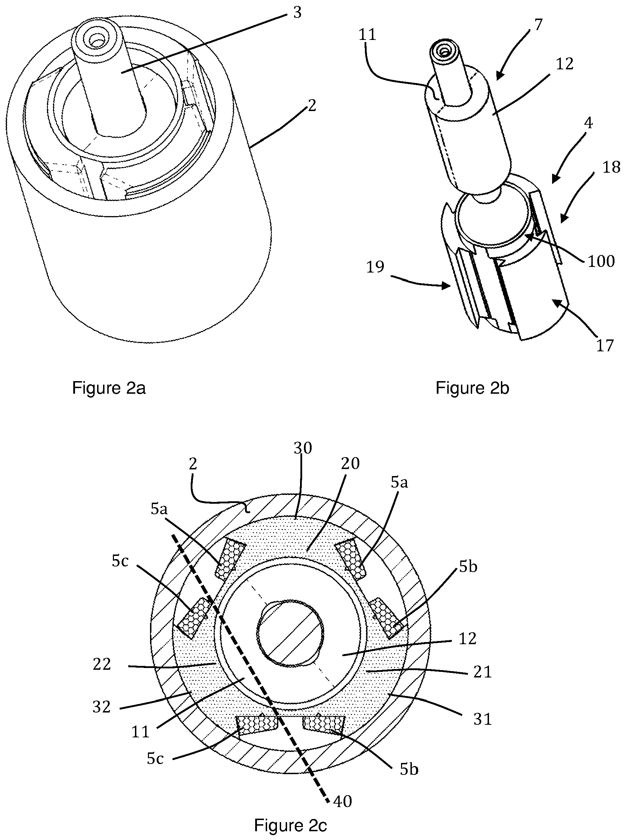

La largeur moyenne L_{N} du noyau est comprise 0,5 R et 1,2 R. La section de ce noyau (20 à 22) peut être constante, ou se restreindre en direction de l'extérieur, comme illustré par l'exemple représenté par les figures 2a à 2c. Le noyau peut également s'élargir vers l'extérieur, mais cette solution est moins avantageuse.

La largeur maximale Lp de l'extension périphérique (30 à 32) est comprise entre 1,1 R et 1,8 R et en tout état de cause supérieure à E+ L_{N}, où E désigne l'épaisseur de la bobine (5a, 5b, 5c).

Le corps (4) de bobine, détaillé en figure 1d, est formé d'une seule pièce dont la zone centrale présente un perçage circulaire (8) apte à laisser passer l'axe de rotation (3) et un élément de guidage éventuel (non montré ici). Sur le pourtour du corps (4), trois prolongements (17 à 19) sont prévus délimitant les emplacements pour l'enroulement des trois bobines (5a, 5b et 5c). Chacun des prolongements (17 à 19) est symétrique par rapport à un plan médian radial.

Chaque emplacement est caractérisé par des gorges ou encoches (6) qui décrivent un chemin fermé tout autour des noyaux (20 à 22) et s'étendant ainsi dans le sens axial et transversal par rapport à l'axe de rotation (3) du moteur (1). L'unicité du corps (4) de bobine et la présence des gorges (6) rendent la réalisation aisée, précise et sûre de l'ensemble ainsi bobiné.

### Deuxième exemple de réalisation

Les figures 2a, 2b et 2c représentent un deuxième exemple de réalisation.

L'enveloppe extérieure (2) est réalisée en un matériau ferromagnétique massif. Le corps statorique est réalisé en une pièce moulée en plastique chargée avec des particules ferromagnétiques.

Le rotor comprend un aimant cylindrique formé d'une paire de pôles par assemblage d'un aimant monobloc de forme tubulaire, aimanté sensiblement diamétralement pour présenter un pôle Nord sur un demi-périmètre tubulaire (11), et un pôle Sud sur un demi-périmètre tubulaire (12) complémentaire.

Les prolongements (17 à 19) diffèrent de ceux décrit en relation avec le premier mode de réalisation par le fait que les noyaux (20 à 22) présente une section transversale de forme trapézoïdale, avec la grande base du coté intérieur et la grande base du coté extérieur ce qui permet de maximiser le remplissage en cuivre par rapport à l'espace disponible. Le plan (40) passant par les spires inférieures de la bobine traverse le rotor, mais une extension axiale (100) permet au bobinage de ne pas intersecter le plan (40). Ainsi, le canal (16) présentant une section constante, l'introduction du rotor par un déplacement axial dans le stator bobiné est possible.

L'extension périphérique (30 à 32) recouvre complètement les bobinages (5a, 5b et 5c).

### Troisième variante de réalisation

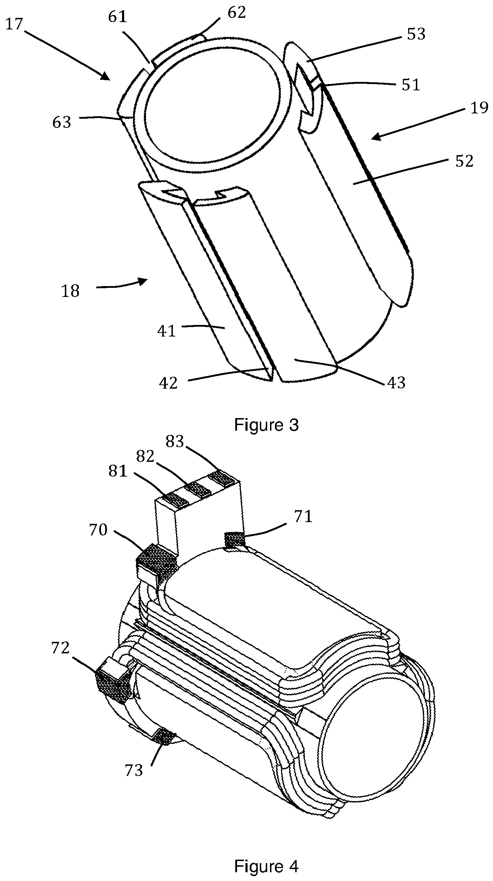

La figure 3 représente un corps dont les prolongements (17 à 19) sont fendus par des fentes longitudinales (41, 51, 61). Dans l'exemple décrit, les protubérances (17 à 19) sont formées par des ailes (42, 43 ; 52, 53 ; 62, 63) symétriques par rapport au plan radial passant par le prolongement correspondant. Les prolongements (17 à 19) sont ainsi déformables élastiquement.

### Quatrième variante de réalisation

La figure 4 présente une variante de réalisation où certaines zones du corps statorique sont métallisées pour former des zones (70 à 73) permettant la soudure des fils des bobinages, et se prolongeant par des pistes métallisées pour aboutir à des secondes zones métallisées (81 à 83) permettant la connection électrique.

### Cinquième variante de réalisation

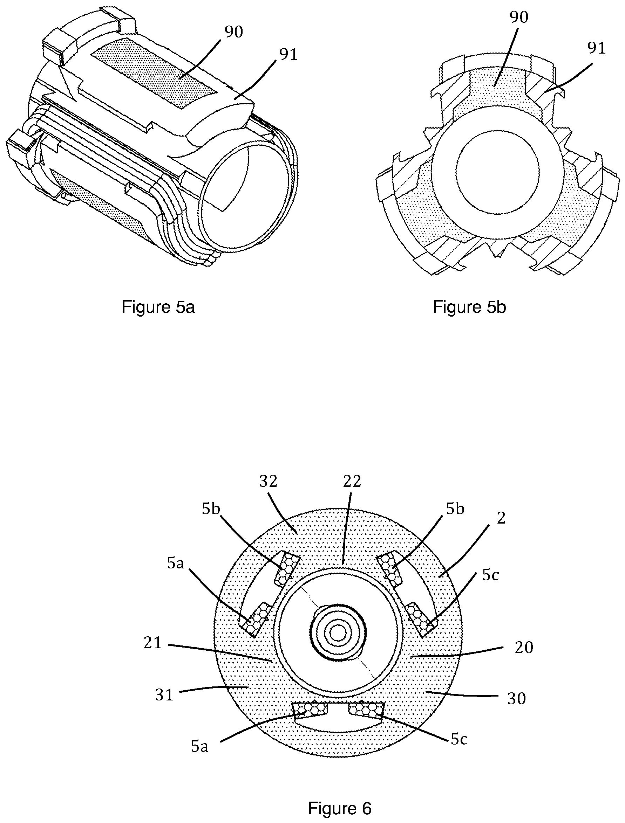

Les figures 5a et 5b présente une variante où le corps statorique est réalisé avec une partie intérieure (90) ferromagnétique, par exemple une pièce en matière plastique chargée avec des particules ferromagnétiques, et une partie extérieure (91) en matière plastique.

De façon générale, pour les différentes variantes, le matériau ferromagnétique présente avantageusement une perméabilité relative inférieure à 100 et une faible coercivité (champ coercitif inférieur à 100 A/m) pour concilier la fermeture satisfaisante des lignes de champs et la limitation du couple de détente et des pertes fer.

### Sixième variante de réalisation

La figure 6 décrit une alternative où le corps statorique formant une pièce monolithique avec l'enveloppe tubulaire (2), par assemblage ou surmoulage avec un même matériau plastique chargé de particules ferromagnétiques.

## Revendications

**1.** Machine électrique sans encoches, comprenant un rotor tubulaire aimanté (7) pour présenter des alternances polaires circonférentielles, et un stator comportant un corps (4) étant traversé par un canal (16) d'une section transversale intérieure correspondant sensiblement à la section transversale extérieure dudit rotor (7), ledit corps (4) supportant une pluralité de bobines (5a à 5c), ledit stator étant entouré par une enveloppe (2) extérieure ferromagnétique, **caractérisée en ce que** ledit corps (4) est prolongé par trois, quatre ou six protubérances (17 à 19) radiales, en un matériau isolant électriquement, présentant, en section transversale, un noyau (20 à 22) longitudinal pour recevoir une bobine (5a à 5c), ledit noyau (16) étant prolongé par une extension périphérique (30 à 32) présentant une surface extérieure complémentaire à la surface intérieure de ladite enveloppe (2) et recouvrant la zone bobinée.

**2.** Machine électrique selon la revendication 1 **caractérisée en ce que** le corps (4) comporte trois protubérances (17 à 19) et le rotor (7) comporte une ou deux paires de pôles, le corps (4) présentant une partie centrale de section transversale triangulaire.

**3.** Machine électrique selon la revendication 1 ou 2 **caractérisée en ce que** le rayon du rotor (7) est supérieur à la distance entre l'axe longitudinal dudit canal du stator, et le plan passant par la spire intérieure du bobinage.

**4.** Machine électrique selon l'une au moins des revendications précédentes **caractérisée en ce que** le rayon extérieur de l'enveloppe (2) est inférieur à 5 millimètres.

**10.** Machine électrique selon l'une au moins des revendications précédentes **caractérisée en ce que** ledit rotor (7) aimanté est constitué par un assemblage d'aimants en forme de tuile aimantés diamétralement, selon des directions alternées.

**11.** Machine électrique selon l'une au moins des revendications 1 à 9 **caractérisée en ce que** ledit rotor (7) aimanté est constitué par un matériau monolithique fritté aimanté selon une direction unique ou des directions alternées.

**12.** Machine électrique selon l'une au moins des revendications précédentes **caractérisée en ce que** ledit corps (4) présente à l'une des extrémités des surfaces métallisées (70 à 73 et 81 à 83) pour la soudure du fil de bobinage d'une part, et la liaison avec élément de connexion d'autre part.

**13.** Machine électrique selon l'une au moins des revendications précédentes **caractérisée en ce que** ledit corps (4) est réalisé en un matériau déformable élastiquement.

**14.** Machine électrique selon l'une au moins des revendications précédentes **caractérisée en ce que** lesdites protubérances (17 à 19) sont fendues selon un plan de symétrie radial.

**15.** Machine électrique selon l'une au moins des revendications précédentes **caractérisée en ce que** le rayon extérieur du rotor (7) est compris entre 0,4 R et 0,5 R, avec R désignant le rayon extérieur R du stator.

**16.** Machine électrique selon l'une au moins des revendications précédentes **caractérisée en ce que** la largeur moyenne L_{N} du noyau (20 à 22) est comprise 0,5 R et 1,2 R.

**17.** Machine électrique selon l'une au moins des revendications précédentes **caractérisée en ce que** la largeur maximale L_{P} de l'extension périphérique (30 à 32) est comprise entre 1,1 R et 1,8 R et supérieure à E+ L_{N}, où E désigne l'épaisseur de la bobine (5a, 5b, 5c).

**18.** Machine électrique selon l'une au moins des revendications précédentes **caractérisée en ce que** la section des noyaux (20 à 22) est constante.

**19.** Machine électrique selon l'une au moins des revendications 1 à 17 **caractérisée en ce que** la section des noyaux (20 à 22) soit restreinte en direction de l'extérieur.

**20.** Machine électrique selon l'une au moins des revendications précédentes **caractérisée en ce que** l'enveloppe (2) est composée d'un paquet de tôles empilées (10).

**21.** Procédé de réalisation d'une machine électrique sans encoches comprenant un rotor tubulaire aimanté (7) pour présenter des alternances polaires circonférentielles, et un stator comportant un corps (4) étant traversé par un canal (16) d'une section transversale intérieure correspondant sensiblement à la section transversale extérieure dudit rotor (7), ledit corps (4) supportant une pluralité de bobines (5a à 5c), ledit stator étant entouré par une enveloppe (2) extérieure ferromagnétique, **caractérisée en ce que** ledit corps (4) est prolongé par trois, quatre ou six protubérances (17 à 19) radiales en un matériau isolant électriquement, présentant, en section transversale, un noyau (20 à 22) longitudinal pour recevoir une bobine (5a à 5c), ledit noyau (16) étant prolongé par une extension périphérique (30 à 32) présentant une surface extérieure complémentaire à la surface intérieure de ladite enveloppe (2) et recouvrant la zone bobinée, ledit procédé comprenant une étape de réalisation dudit corps.
